Europäisches Patentamt

European Patent Office

Office européen des brevets

(19)

(11) Veröffentlichungsnummer: **0 248 325 B1**

# (12) EUROPÄISCHE PATENTSCHRIFT

(45) Veröffentlichungstag der Patentschrift: **23.02.94**

(51) Int. Cl.5: **H04Q 11/04**, H04M 11/06, H04M 3/24

(21) Anmeldenummer: **87107617.0**

(22) Anmeldetag: **25.05.87**

(54) **Verfahren zur Durchschalteprüfung einer Breitband-Koppeleinrichtung.**

(30) Priorität: **02.06.86 DE 3618522**

(43) Veröffentlichungstag der Anmeldung:
**09.12.87 Patentblatt 87/50**

(45) Bekanntmachung des Hinweises auf die
Patenterteilung:
**23.02.94 Patentblatt 94/08**

(84) Benannte Vertragsstaaten:
**AT BE CH DE FR GB IT LI NL SE**

(56) Entgegenhaltungen:
**EP-A- 0 163 288**
**EP-A- 0 171 803**
**US-A- 4 439 826**

**PATENT ABSTRACTS OF JAPAN, Band 9, Nr.
274 (E-354)[1997], 31. Oktober 1985 & JP-A-60
117 858**

(73) Patentinhaber: **SIEMENS AKTIENGESELL-
SCHAFT**
**Wittelsbacherplatz 2**
**D-80333 München(DE)**

(72) Erfinder: **Fiebig, Hans, Dipl.-Ing.**
**Wesendonkstrasse 75**
**D-8000 München 81(DE)**

## Beschreibung

In Fernmeldevermittlungsanlagen besteht neben deren Hauptaufgabe, Leitungsanschlüsse für einen exklusiven Nachrichtenaustausch zeitweilig miteinander zu verbinden, zugleich die Nebenaufgabe, fehlerhafte Verbindungen, insbesondere zwischen zwei bereits miteinander verbundenen Leitungsanschlüssen und einem dritten Leitungsanschluß (sog. Doppelverbindungen), zu vermeiden. Insbesondere in Breitband-Koppeleinrichtungen für Bildkommunikation kennt man außer steuerungsfehlerbedingten Fehlverbindungen auch Fehlverbindungen, die durch Nebensprecheffekte hervorgerufen werden. Nachdem solche Fehlverbindungen sporadisch auftreten können, müssen sie, um nachteilige Störungen vermeiden zu können, sehr schnell erkannt werden.

Um Fehlverbindungen in Vermittlungsanlagen festzustellen, unterzieht man deren Koppeleinrichtungen sogenannten Durchschalteprüfungen. Das Konzept einer solchen Durchschalteprüfung muß dabei die Größe der Vermittlungsanlage, vermittlungstechnische Abläufe und ggf. eine Aufgabenteilung zwischen verschiedenen Vermittlungsprozessoren berücksichtigen.

So hat man zur Durchschalteprüfung einer Breitband-Koppeleinrichtung, über die Bildfernsprechsignale durchgeschaltet werden, vorgesehen, daß jeweils nach einer Verbindungsdurchschaltung bei dem jeweils einen an der betreffenden Verbindung beteiligten Leitungsanschluß der Koppeleinrichtung ein Pilotsignal eingespeist wird und dann geprüft wird, ob dieses Pilotsignal nur zu dem jeweils anderen an der betreffenden Verbindung beteiligten Leitungsanschluß der Koppeleinrichtung. (und zu keinem weiteren Anschluß) gelangt. Auf diese Art und Weise ist es an sich möglich, jede neu geschaltete Verbindung auf Durchschaltung und Doppelverbindung zu überprüfen; das Verfahren führt indessen wegen der jeweils erforderlichen Abfrage aller Leitungsanschlüsse schnell zu relativ großen Rechnerbelastungen und Verarbeitungszeiten, so daß es nur für sehr kleine Vermittlungsanlagen praktikabel ist.

Für eine Vermittlungsanlage mit jeweils eine Vielzahl von (Teilnehmer-)Anschlüssen aufnehmenden, jeweils einen Gruppenkoppler und einen Gruppenprozessor aufweisenden (dezentralen) Anschlußgruppen, mit einem demgegenüber zentralen Koppelnetz und mit einem zentralen Koordinationsprozessor ist es (aus EP-A-01 63 288) bekannt, zur Durchschalteprüfung einer Raummultiplex-Koppeleinrichtung durch verbindungsindividuelles eingangsseitiges Einspeisen und ausgangsseitiges Auswerten einer Prüfinformation in der Weise zu verfahren, daß die Prüfinformation jeweils eine den für die betreffende Verbindung benutzten Eingang der Koppeleinrichtung kennzeichnende Absenderadresse sowie eine den zu benutzenden Ausgang der Koppeleinrichtung kennzeichnende Zieladresse umfaßt und empfangsseitig mit den durch diese Adressen gebildeten Verbindungsdaten verglichen wird,

wobei in einem Fernmeldesystem, bei dem auf den durch die Raummultiplex-Koppeleinrichtung zu verbindenden Leitungen in periodisch sich wiederholenden Zeitspannen außer der durchzuschaltenden Nutzinformation auch der Signalisierung, Steuerung und Synchronisierung dienende Betriebsinformationen übertragen werden,

entweder die Prüfinformationen nur während des Verbindungsaufbaues in den für die Nutzinformationen vorgesehenen Zeitspannen übertragen werden und empfangsseitig einmalig ein Vergleich mit den gespeicherten Einstellinformationen vorgenommen wird

oder aber die Prüfinformation während der gesamten Dauer einer Verbindung anstelle einer der Betriebsinformationen, die eingangs der Raummultiplex-Koppeleinrichtung ausgeblendet und ggfs. ausgangs der Raummultiplex-Koppeleinrichtung wieder zugeführt werden, in den für diese Betriebsinformationen vorgesehenen Zeitspannen über die Raummultiplex-Koppeleinrichtung übertragen werden und empfangsseitig periodisch ein Vergleich mit den gespeicherten Einstellinformationen vorgenommen wird; der dabei jeweils mit einer der betreffenden Ausgangsleitung individuell zugeordneten Einrichtung vorgenommene empfangsseitige Vergleich bedingt eine entsprechende empfangsseitige Verfügbarkeit der Verbindungsadressen.

In solchem Zusammenhang ist auch schon vorgeschlagen worden (EP-86 103 038.5), zur Durchschalteprüfung einer Breitband-Koppeleinrichtung unter verbindungsindividuellem eingangsseitigen Einspeisen und ausgangsseitigem Auswerten eines eine den Koppeleinrichtungs-Eingang bezeichnende Adresse enthaltenden Prüfsignals in der Weise zu verfahren, daß in einem diensteintegrierenden Telekommunikationssystem mit getrennten Koppeleinrichtungen für Schmalband- und für Breitbanddienste in jeder an einer Breitbandverbindung beteiligten Anschlußleitung Durchschalteprüfsignale, die jeweils die Adresse eben dieser Anschlußschaltung sowie die in von der Gegenseite her empfangenen entsprechenden Durchschalteprüfsignalen etwa enthaltene Adressen der Gegen-Anschlußschaltung enthalten, in die Schmalbandsignallücken des Breitbandsignals eingefügt werden und von jeder Anschlußschaltung die Breitbandsignalübertragung über die zugehörige Anschlußleitung für zumindest eine Übertragungsrichtung nur bei Empfang eines die eigene Adresse enthaltenden Durchschalteprüfsignals freigegeben wird.
Diese Durchschalteprüfung ermöglicht es, bereits individuell von einem jeweils betroffenen Leitungsanschluß her ohne Mitwirkung übergeordneter Einrichtungen fehlerhafterweise nur in einer Richtung zustande kommende Verbindungen und (insbes. nebensprechbedingte) Doppelverbindungen rechtzeitig erkennen zu können, so daß sie gar nicht erst wirksam werden.

Dabei können die über die Breitband-Koppeleinrichtung durchvermittelten Digitalsignale einzeln auch an einen ebenfalls an die Breitband-Koppeleinrichtung angeschlossenen Prüfanschluß angeschaltet werden. Ein solcher Prüfanschluß, der sich zyklisch oder auch von Fall zu Fall gezielt an die einzelnen Leitungsanschlüsse anschalten kann, kann dem Digitalsignal die darin enthaltenen Durchschalteprüfsignale entnehmen und an den zugehörigen Vermittlungsprozessor weiterleiten, der damit die Richtigkeit der bestehenden Verbindung prüfen kann. Mit den Durchschalteprüfsignalen können auch zusätzliche Meldebits zum Prüfanschluß übertragen werden, die der Prüfanschluß dann auswerten und zum Vermittlungsprozessor weiterleiten kann.

Alternativ dazu ist es aber auch möglich, daß von den Anschlußschaltungen selbst über gesonderte Meldesignalverbindungen Meldebits zu dem übergeordneten Vermittlungsprozessor übertragen werden, womit dieser wiederum entsprechende Zusatzinformationen erhalten kann.

Diese bekannte Verfahrensweise ermöglicht in ihrer zuletzt angesprochenen Alternative eine dezentrale, rein anschlußbezogene Durchschalteprüfung einer Breitband-Koppeleinrichtung bereits unter Verzicht auf besondere Prüfanschlüsse und damit unter Vermeidung von mit der Verwendung von Prüfanschlüssen verbundenen Umständen wie etwa des Erfordernisses, in einem Steuerungsablauf auf die Zuteilung eines der in begrenzter Zahl verfügbaren Prüfanschlüsse warten zu müssen oder der Notwendigkeit zusätzlicher Abläufe für Routineprüfungen semipermanenter Verbindungen, - womit sogleich dem jeweiligen Vermittlungsprozessor entsprechende Koordinierungsleistungen erspart werden.

Eine solche gewissermaßen "symmetrische" Auswertung jeweils nur der in dem von der Gegenseite her empfangenen Durchschalteprüfsignal etwa enthaltenen eigenen Adresse durch jeweils beide an einer Verbindung beteiligte Anschlußschaltungen überläßt es indessen dem übergeordneten Vermittlungsprozessor, von verschiedenen Anschlußschaltungen her eintreffende Meldebits miteinander in Beziehung zu setzen und damit der jeweiligen Verbindung zuzuordnen.

Die Erfindung stellt sich nun die Aufgabe einer weiteren Dezentralisierung der Durchschalteprüfung einer Breitband-Koppeleinrichtung.

Die Erfindung betrifft ein Verfahren zur Durchschalteprüfung einer Breitband-Koppeleinrichtung unter verbindungsindividuellem eingangsseitigen Einspeisen und ausgangsseitigen Auswerten eines eine den Koppeleinrichtungs-Eingang bezeichnende Adresse enthaltenden Prüfsignals, demzufolge in einem diensteintegrierenden Telekommunikationssystem mit getrennten Koppeleinrichtungen für Schmalband- und für Breitbanddienste in jeder an einer Breitbandverbindung beteiligten Anschlußschaltung Durchschalteprüfsignale, die jeweils die Adresse eben dieser Anschlußschaltung sowie die in von der Gegenseite her empfangenen entsprechenden Durchschalteprüfsignalen etwa enthaltene Adresse der Gegen-Anschlußschaltung enthalten, in schmalbandige Signallücken des Breitbandsignals eingefügt werden; dieses Verfahren ist erfindungsgemäß dadurch gekennzeichnet, daß in einer der beiden an einer Verbindung beteiligten Anschlußschaltungen diese von der Gegen-Anschlußschaltung her empfangenen Durchschalteprüfsignale auf das Auftreten sowohl der von der genannten Anschlußschaltung her in der Gegen-Anschlußschaltung empfangenen, von dieser in deren Durchschalteprüfsignal eingefügten und so von der Gegen-Anschlußschaltung her zurückübertragenen eigenen Adresse als auch der Adresse der Gegen-Anschlußschaltung überprüft werden und zumindest bei Nichtauftreten wenigstens einer der beiden Adressen ein das Prüfergebnis meldendes Signal von der Anschlußschaltung zu dem ihr zugehörigen Vermittlungsprozessor übertragen wird.

Eine solche Durchschalteprüfung mit einer gewissermaßen unsymmetrischen Auswertung der Durchschalteprüfsignale ermöglicht die Zusammenführung der in den Durchschalteprüfsignalen enthaltenen Adressen der beiden an einer Verbindung beteiligten Anschlußschaltungen bereits in einer solchen Anschlußschaltung selbst und vermeidet damit eine entsprechende Belastung des zugehörigen Vermittlungsprozessors; der Vermittlungsprozessor kann vielmehr bereits die Adressen beider an einer Verbindung beteiligten Anschlußschaltungen zusammen von der betreffenden einen Anschlußschaltung übernehmen.

Dabei können in der betreffenden Anschlußschaltung die Durchschalteprüfsignale ständig auf (nachhaltige) Änderungen überprüft werden, und es wird dann in weiterer Ausgestaltung der Erfindung ein Meldesignal nur nach einer Änderung des Durchschalteprüfsignals übertragen, was zu einer entsprechend geringen Beanspruchung des Vermittlungsprozessors durch solche Meldesignale führt.

Es ist aber auch möglich, daß in der betreffenden Anschlußschaltung die Durchschalteprüfsignale ständig mit einem entsprechend dem jeweiligen Verbindungszustand vom zugehörigen Vermittlungsprozessor vorgegebenen Sollsignal verglichen werden, und es wird dann in weiterer Ausgestaltung der Erfindung ein Meldesignal nur bei einer Abweichung des Durchschalteprüfsignals vom jeweiligen Sollsignal übertragen, was ebenfalls zu einer entsprechend geringen Beanspruchung des Vermittlungsprozessors führt.

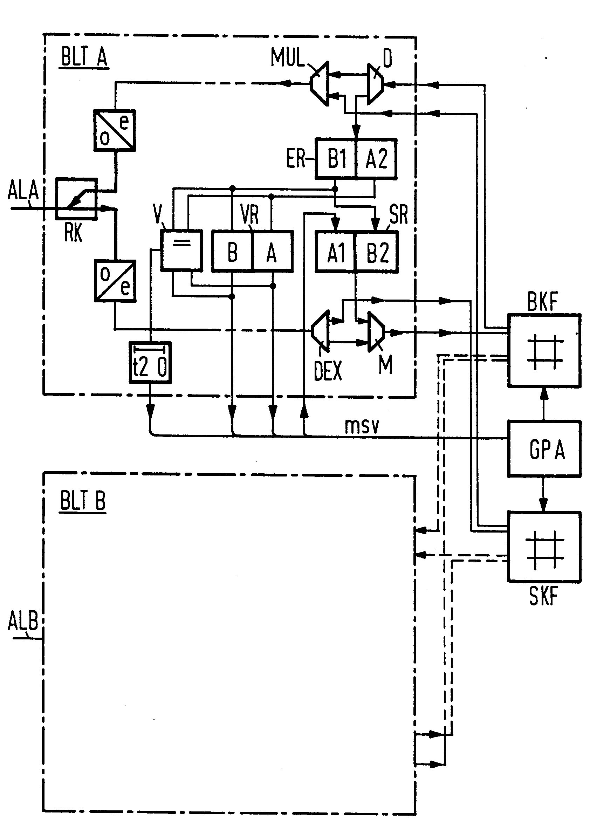

Weitere Besonderheiten der Erfindung werden aus deren nachfolgender näherer Erläuterung an Hand der Zeichnung ersichtlich.

In der Zeichnung ist schematisch in einem zum Verständnis der Erfindung erforderlichen Umfang ein Ausführungsbeispiel eines diensteintegrierenden Telekommunikationssystems mit einer von einem Vermittlungsprozessor GP A gesteuerten Schmalbandkoppeleinrichtung SKF und einer gesonderten, vorzugsweise von demselben Vermittlungsprozessor GP A gesteuerten Breitbandkoppeleinrichtung BKF dargestellt, an die zu Teilnehmerstationen oder auch zu anderen Vermittlungseinrichtungen führende Lichtwellenleiter-Anschlußleitungen AL A,.. ..,AL B jeweils über eine Anschlußschaltung BLT A,...,BLT B angeschlossen sind.

Es sei dazu bemerkt, daß die Anschlußschaltungen in jeweils eine Vielzahl von (Teilnehmer-)Anschlüssen aufnehmenden, jeweils einen Gruppenkoppler und einen Gruppenprozessor aufweisenden (dezentralen) Anschlußgruppen zusammengefasst sein können uns daß das Telekommunikationssystem ausserdem ein demgegenüber zentrales Koppelnetz und einen zentralen Koordinationsprozessor aufweisen kann, wobei dann die in der Zeichnung dargestellte Koppeleinrichtung jeweils für den jeweiligen Gruppenkoppler und/oder das zentrale Koppelnetz steht und der in der Zeichnung dargestellte Vermittlungsprozessor GP A für den Gruppenprozessor und/oder den zentralen Koordinationsprozessor.

Aus der die Anschlußschaltung BLT A näher in schaltungstechnischen Einzelheiten zeigenden Zeichnung wird dabei ersichtlich, daß die - dann einfaserige - Lichtwellenleiter-Anschlußleitung AL in der Anschlußschaltung BLT über einen Lichtwellenleiter-Richtungskoppler RK mit dem Ausgang eines elektro/optischen Wandlers e/o und mit dem Eingang eines opto/elektrischen Wandlers o/e verbunden sein kann. Mit dem Eingang des elektro/optischen Wandlers e/o ist der Ausgang eines Multiplexers MUL verbunden, der über die Schmalbandkoppeleinrichtung SKF durchvermittelte Schmalband-Digitalsignale (z.B. 64-kbit/-Fernsprechsignale) und über die Breitbandkoppeleinrichtung BKF durchvermittelte Breitbandsignale (Bildsignale) sowie (z.B. 8-kbit/s-)Steuersignale und Synchronisiersignale zu einem über die Lichtwellenleiter-Anschlußleitung AL zu übertragenden Multiplexsignal, beispielsweise einem etwa einen sog. H4-Kanal ausfüllenden 140-Mbit/s-Zeitmultiplexsignal oder einem etwa einen sog. H1-Kanal ausfüllenden 2-Mbit/s-Zeitmultiplexsignal, zusammenfaßt. Ein in der umgekehrten Übertragungsrichtung über die Lichtwellenleiter-Anschlußleitung AL übertragenes Multiplexsignal, insbesondere Zeitmultiplexsignal, wird in einem dem opto/elektrischen Wandler o/e nachgeschalteten Demultiplexer DEX in die entsprechenden Einzelsignale, beispielsweise in (z.B. 8-kbit/s-)Steuersignale, Synchronisiersignale, über die Schmalbandkoppeleinrichtung SKF durchzuvermittelnde (z.B. 64-kbit/s-Fernsprech-)Schmalband-Digitalsignale und ein über die Breitbandkoppeleinrichtung BKF durchzuschaltendes Breitbandsignal (Bildsignal), aufgefächert.

In nach einer solchen Auffächerung bestehende schmalbandige Signallücken des Breitbandsignals werden nun in einer an einer Breitbandverbindung beteiligten Anschlußschaltung BLT während der ganzen Verbindungsdauer Durchschalteprüfsignale eingefügt, die jeweils die Adresse eben dieser Anschlußschaltung BLT sowie ggf. die in von der Gegenseite her über die Breitbandkoppeleinrichtung BKF empfangenen entsprechenden Durchschalteprüfsignalen enthaltene Adresse einer Gegen-Anschlußschaltung enthalten. Wie aus der Zeichnung ersichtlich wird, kann dazu in jeder Anschlußschaltung BLT ein Senderegister SR vorgesehen sein, in dessen ersten Registerteil A1, vom Vermittlungsprozessor GP A her jeweils eingegeben (oder auch ständig), die Adresse eben dieser Anschlußschaltung stehen möge und in dessen zweiten Registerteil B2 ggf. die empfangene Adresse einer Gegen-Anschlußschaltung eingegeben wird; ausgangsseitig führt das Senderegister SR zu einem entsprechenden Eingang eines Multiplexers M, der zwischen den Demultiplexer DEX und die Breitbandkoppeleinrichtung BKF eingefügt ist, so daß er das vom Senderegister SR jeweils abgegebene Durchschalteprüfsignal in eine Signallücke des Breitbandsignals einfügt.
Es sei hier bemerkt, daß die Erfindung auch dann Anwendung finden kann, wenn auf der Anschlußleitung AL an sich gar kein Schmalbandsignal übertragen wird; es genügt vielmehr, davon auszugehen, daß im Breitbandsignal eine schmalbandige (beispielsweise 4-kbit/s-)Signallücke (beispielsweise in Form einer Bitposition in jedem zweiten Rahmen) zur Aufnahme des Durchschalteprüfsignals verfügbar ist.

Im umgekehrt gerichteten Signalweg ist zwischen die Breitbandkoppeleinrichtung BKF und den Multiplexer MUL ein Demultiplexer D eingefügt, der solche von einer mit der gerade betrachteten Anschlußleitung BLT A über die Breitbandkoppeleinrichtung BKF gerade verbundenen anderen Anschlußschaltung in das Breitbandsignal eingefügte Durchschalteprüfsignale ausblendet und einem Empfangsregister ER zuführt. Dessen erster Registerteil B1, der ggf. die in einem solchen Durchschalteprüfsignal enthaltene Adresse einer mit der gerade betrachteten Anschlußschaltung BLT A über die Breitbandkoppeleinrichtung BKF gerade verbundenen Gegen-Anschlußschaltung, beispielsweise der in gleicher Weise aufgebauten Anschlußschaltung BLT B, aufnimmt, ist mit dem Senderegisterteil B2 verbunden, so daß die in in der Anschlußschaltung BLT A empfangenen Durchschalteprüfsignalen enthaltene Adresse der Gegen-Anschlußschaltung (BLT B) in diesen Senderegisterteil B2 gelangt und dann, wie schon erwähnt, in den nachfolgend von der gerade betrachteten Anschlußschaltung BLT A abzugebenden Durchschalteprüfsignalen an die Adresse eben dieser Anschlußschaltung BLT A angefügt und damit zur Gegen-Anschlußschaltung (BLT B) zurückübertragen wird.

In entsprechender Weise wird, ohne daß dies in der Zeichnung noch näher verdeutlicht ist, in der im Beispiel gerade mit der Anschlußschaltung BLT A über die Breitbandkoppeleinrichtung BKF verbundenen Anschlußschaltung BLT B die in den dort von der Anschlußschaltung BLT A her empfangenen Durchschalteprüfsignalen enthaltene Adresse der Anschlußschaltung BLT A in den von der Anschlußschaltung BLT B ausgesendeten Durchschalteprüfsignalen gewissermaßen reflektiert. Die reflektierte Adresse gelangt dann bei Empfang dieser Durchschaltesignale in der Anschlußschaltung BLT A in deren Empfangsregisterteil A2.

In einer der beiden an einer Verbindung beteiligten Anschlußschaltungen BLT, beispielsweise in der Anschlußschaltung des rufenden Teilnehmers, werden nun die von der Gegen-Anschlußschaltung her empfangenen Durchschalteprüfsignale auf das Auftreten sowohl der eigenen Adresse als auch der Adresse der Gegen-Anschlußschaltung überprüft. In der Zeichnung ist dazu für die Anschlußschaltung BLT A angedeutet, daß ein Vergleicher V jeweils die beiden mit dem gerade empfangenen Durchschalteprüfsignal in das Empfangsregister ER gelangten Adressen mit zwei in einem Vergleichsregister VR in entsprechenden Registerteilen A und B stehenden entsprechenden Adressen vergleicht. Dabei können, wie dies auch in der Zeichnung angedeutet ist, im Vergleichsregister VR die im jeweils zuletzt empfangenen Durchschalteprüfsignal enthaltenen beiden Adressen stehen, so daß dann der Vergleicher V Änderungen des Durchschalteprüfsignals festzustellen vermag; ohne daß dies in der Zeichnung im einzelnen dargestellt ist, ist es aber auch möglich, vom zugehörigen Vermittlungsprozessor GP A her jeweils bei einem Verbindungsaufbau die Adressen der beiden an der Verbindung beteiligten Anschlußschaltungen als Sollsignal in das Vergleichsregister VR einzugeben, so daß der Vergleicher V dann Abweichungen des Durchschalteprüfsignals vom jeweiligen Sollsignal festzustellen vermag.

Zumindest bei Nichtauftreten wenigstens einer der beiden Adressen im jeweils gerade empfangenen Durchschalteprüfsignal wird dann ein das Prüfergebnis meldendes Signal von der Anschlußschaltung BLT A über eine entsprechende Meldesignalverbindung msv zum zugehörigen Vermittlungsprozessor GP A übertragen, der daraufhin die beiden Anschlußschaltungsadressen aus der Anschlußschaltung BLT A über die Meldesignalverbindung msv entnehmen kann, um daraus entsprechende Folgerungen zu ziehen. Dabei wird, wie dies auch in der Zeichnung angedeutet ist, der Vergleicher V zweckmäßigerweise mit einer Abfallverzögerung versehen, so daß die Meldesignalübertragung bei einer Änderung des Durchschalteprüfsignals für eine Verzögerungszeitspanne t2 unterbleibt und somit Einzelfehler bei der Übertragung der Durchschalteprüfsignale nicht zu einer Meldesignalgabe führen. Unter der Annahme, daß eine Änderung des Durchschalteprüfsignals erst dann als erkannt gewertet wird, wenn das geänderte Durchschalteprüfsignal viermal empfangen wurde, kann man bei einem ein Flag und die beiden Anschlußschaltungsadressen enthaltenden, beispielswseise 40 bis 46 bit langen Durchschalteprüfsignal mit einer Überprüfungszeit von

$$4 \times 46 \text{ bit} / 4 \text{ kbit/s} = 46 \text{ ms}$$

rechnen.

Mit der beschriebenen Durchschalteprüfung wird der Vermittlungsprozessor von Steuerungsleistungen für die Prüfung und Überwachung des Koppelnetzes weitgehend freigestellt:
Zur Durchschalteprüfung meldet sich die auf der rufenden Verbindungsseite liegende Anschlußschaltung BLT von sich aus mit den Adressen der an der Verbindung beteiligten Anschlußschaltungen, sobald die Verbindung im Koppelnetz eingestellt ist; fehlerhafte Verbindungen äußern sich in falschen Adressen.

Nach der Durchschalteprüfung ergibt sich von selbst eine - besonders für semipermanente Verbindungen bedeutsame - ständige Überwachung der bestehenden Verbindung, wobei die auf der rufenden Verbindungsseite liegende Anschlußschaltung BLT spontan bei Auftreten eines Verbindungsfehlers reagiert.

Mit der Durchschalteprüfung bzw. Verbindungsüberwachung werden zugleich die die Durchschalteprüfung bzw. Verbindungsüberwachung durchführenden Schaltungen im Betrieb mitgetestet, wobei aber auch eine gezielte Prüfung durch Schalten von Pseudoverbindungen im Koppelnetz nicht ausgeschlossen ist.

**Patentansprüche**

1. Verfahren zur Durchschalteprüfung einer Breitband-Koppeleinrichtung unter verbindungsindividuellem eingangsseitigen Einspeisen und ausgangsseitigen Auswerten eines eine den Koppeleinrichtungs-Eingang bezeichnende Adresse enthaltenden Prüfsignals, demzufolge in einem diensteintegrierenden Telekommunikationssystem mit getrennten Koppeleinrichtungen (SKF, BKF) für Schmalband- und für Breitbanddienste in jeder an einer Breitbandverbindung beteiligten Anschlußschaltung (BLT) Durchschalteprüfsignale, die jeweils die Adresse eben dieser Anschlußschaltung (BLT A) sowie die in von der Gegenseite her empfangenen entsprechenden Durchschalteprüfsignalen etwa enthaltene Adresse der Gegen-Anschlußschaltung (BLT B) enthalten, in schmalbandige Signallücken des Breitbandsignals eingefügt werden,
**dadurch gekennzeichnet,**
daß in einer der beiden an einer Verbindung beteiligten Anschlußschaltungen (BLT A) diese von der Gegen-Anschlußschaltung (BLT B) her empfangenen Durchschalteprüfsignale auf das Auftreten sowohl der von der genannten Anschlußschaltung (BLT A) her in der Gegen-Anschlußschaltung (BLT B) empfangenen, von dieser in deren Durchschalteprüfsignal eingefügten und so von der Gegen-Anschlußschaltung (BLT B) her zurückübertragenen eigenen Adresse als auch der Adresse der Gegen-Anschlußschaltung (BLT B) überprüft werden und zumindest bei Nichtauftreten wenigstens einer der beiden Adressen ein das Prüfergebnis meldendes Signal von der Anschlußschaltung (BLT A) zu dem ihr zugehörigen Vermittlungsprozessor (GP A) übertragen wird.

2. Verfahren nach Anspruch 1,
**dadurch gekennzeichnet,**
daß ein Meldesignal nur nach einer Änderung des Durchschalteprüfsignals übertragen wird.

3. Verfahren nach Anspruch 1,
**dadurch gekennzeichnet,**
daß ein Meldesignal nur bei einer Abweichung des Durchschalteprüfsignals von einem Sollsignal übertragen wird.

**Claims**

1. Method for testing the through-connection of a broadband switching network with connection-individual input-end feeding-in and output-end evaluating of a test signal containing an address designating the switching network input, according to which, in an integrated-services telecommunication system having separate switching networks (SKF, BKF) for narrowband and for broadband services, in each line circuit (BLT) involved in a broadband connection, through-connection test signals which in each case contain the address of precisely this line circuit (BLT A) and the address of the distant line circuit (BLT B), which may be contained in corresponding through-connection test signals received from the distant station, are inserted into narrowband gaps in the broad-band signal, characterized in that in one of the two line circuits (BLT A) involved in a connection, these through-connection test signals received from the distant line circuit (BLT B) are checked for the occurrence both of the own address received from the said line circuit (BLT A) in the distant line circuit (BLT B), inserted by the latter in its through-connection test signal and thus transmitted back from the distant line circuit (BLT B), and of the address of the distant line circuit (BLT B) and a signal indicating the test result is transmitted from the line circuit (BLT A) to its associated switching processor (GP A) at least with the non-occurrence of at least one of the two addresses.

2. Method according to Claim 1, characterized in that an indicating signal is only transmitted after a change in the through-connection test signal.

3. Method according to Claim 1, characterized in that an indicating signal is only transmitted with a deviation in the through-connection test signal from a nominal signal.

**Revendications**

1. Procédé de contrôle des interconnexions dans un dispositif de couplage à large bande, moyennant l'alimentation côté entrée et l'évaluation côté sortie, d'une manière individuelle pour chaque liaison, d'un signal de contrôle contenant une adresse désignant l'entrée du dispositif de couplage, selon lequel par conséquent, dans un système de télécommunication à intégration de services comportant des dispositifs de couplage séparés (SKF, BKF) pour des services à bande étroite et des services à large bande, dans chaque circuit d'interconnexion (BLT) participant à une liaison à large bande, des signaux de contrôle d'interconnexion, qui contiennent respectivement l'adresse précisément de ce circuit de raccordement (BLT A) ainsi que l'adresse du circuit de raccordement opposé (BLT B), qui est contenue dans des signaux de contrôle d'interconnexion correspondants, reçus à partir du côté opposé, sont insérés dans des vides à bande étroite du signal à large bande, caractérisé par le fait que dans l'un des deux circuits de raccordement (BLT A), qui participent à une liaison, dans ces signaux de contrôle d'interconnexion reçus de la part du circuit de raccordement opposé (BLT B) est exécuté un contrôle de l'apparition aussi bien de l'adresse propre, qui est reçue à partir dudit circuit de raccordement (BLT A), dans le circuit de raccordement opposé (BLT B), insérée par ce dernier dans son signal de contrôle d'interconnexion et ainsi transmise en retour à partir du circuit de raccordement opposé (BLT B), que de l'apparition de l'adresse du circuit de raccordement opposé (BLT B), et qu'au moins dans le cas de la non apparition d'au moins l'une des deux adresses, un signal, qui signale le résultat du contrôle, est envoyé par le circuit de raccordement (BLT A) au processeur de commutation (GP A), qui lui est associé.

2. Procédé suivant la revendication 1, caractérisé par le fait qu'un signal de signalisation est transmis uniquement après une modification du signal de contrôle d'interconnexion.

3. Procédé suivant la revendication 1, caractérisé par le fait qu'un signal de signalisation est transmis uniquement dans le cas où le signal de contrôle d'interconnexion diffère d'un signal de consigne.